# NEW EUROPEAN PATENT SPECIFICATION

(11) **EP 1 109 861 B2**
(45) Date of publication and mention of the opposition decision: **07.03.2012**
(45) Mention of the grant of the patent: 19.01.2005
(21) Application number: 99936768.3
(22) Date of filing: 04.08.1999
(51) Int. Cl.: C08L 33/12, B32B 27/30, B29D 7/00

(54) **ACRYLIC MATERIAL**
ACRYLATISCHES MATERIAL
MATIERE ACRYLIQUE

(30) Priority: 05.08.1998 GB 9817048; 19.08.1998 US 97072 P; 03.09.1998 US 99055 P
(43) Date of publication of application: 27.06.2001
(73) Proprietor: Lucite International UK Limited, Southampton, Hampshire SO14 3BP (GB)
(72) Inventor: BRIGGS, Alistair Duncan, Middlesbrough, Cleveland TS7 8HL (GB); EUSTACE, Paul, Middlesrough, Cleveland TS8 8HZ (GB); TABB, Malcolm Ian, Darlington, County Durham DL3 0UQ (GB)
(74) Representative: Smithson, Robert Alan
(86) International application number: PCT/GB1999/002329
(87) International publication number: WO 2000/008098

(56) References cited:
- EP-A- 0 458 520
- EP-A- 0 893 473
- AT-B- 383 991

## Description

Acrylic materials are known for use in capstock applications, for example to provide a tough coating layer over a substrate thermoplastic material. In this way the characteristics of the capstock material may be imparted to an article which is made from a substrate which has different characteristics. Acrylic materials are a good choice as a capstock because of their properties of toughness, stability, weatherability and appearance.

Acrylic capstock materials and a method of extruding a composite which includes a capstock are described in US-A- 5,318,737. The patent describes the use as a capstock of a high molecular weight acrylic resin which has a relatively high melt viscosity (melt flow index (MFI) from about 0.4 to about 0.75) for coextrusion onto acrylonirile-butadiene-styrene (ABS) plastics in particular. The high molecular weight acrylic layer provides a laminate which is suitable for further forming into bathtubs and other items of sanitaryware.

Acrylic materials have particularly good resistance to weathering and therefore acrylic capstock materials are particularly useful to provide a weather resistant outer layer over building components such as cladding, window frames, doors etc, which are often fabricated from structural thermoplastic materials such as polyvinyl chloride (PVC) or ABS. US-A-4189520 describes an extrusion process for providing an acrylic covering layer on a PVC structural member, in particular for window profile extrusions. The PMMA used is of relatively high molecular weight (120,000 - 180,000 daltons).

Composite materials which include a capstock layer over a substrate thermoplastic layer are normally formed by coextrusion of the layers together to form the composite. In the coextrusion of two or more thermoplastic materials, it is normally necessary to match the viscosities of the materials in order to achieve a satisfactory result. When the materials to be coextruded have different viscosities at the desired temperature for extrusion, coextrusion may be difficult, requiring special die designs to provide large flow paths, or incorporating heaters. The problem of matching the viscosities of coextruded plastics is discussed in US-A-5318737, particularly in regard to certain substrates such as PVC which are thermally degradable at the normal extrusion temperatures of an acrylic capstock material. The use of multi-manifold dies may overcome this problem by enabling different extrusion conditions to be used for each material. Although the use of such technology may enable certain capstock materials to be used, the production of an even, thin coating may still cause problems so thick layers of capstock are often applied to ensure complete coverage of the substrate by the capstock material.

EP 0 458 520 (US-A-5 318 737) discloses an acrylic capstock applied to a composite plastic by feedback co-extrusion. The acrylic capstock has a melt flow index (MFI) of 0.4 to 0.75 to prevent excessive edge flow of the acrylic capstock during the extrusion process.

The coextrusion of acrylic capstocks onto PVC materials provides particular problems because PVC is normally extruded at temperatures in the range 190 - 210 °C. Foamed PVC has to be extruded at even lower temperatures, between 160 - 190 °C to control the foaming process and thus the subsequent performance of the extruded article. Acrylic materials are normally extruded at temperatures above 220°C, at which temperatures PVC starts to degrade. Therefore the coextrusion of acrylic materials onto PVC may lead to thermal degradation of the underlying PVC, resulting in an article which may have degraded physical properties. The temperature at which an acrylic material is processed has a marked effect on its viscosity and rheological properties so that at lower temperatures it is of relatively high viscosity and therefore unsuitable for extruding as a thin layer because of its decreased ability to flow onto the substrate. It is desirable to be able to form a thin layer of the capstock because it is usually relatively expensive compared to the substrate.

One requirement for an acrylic capstock for use on building components such as cladding or window profiles is that it is tough and resistant to impact. It is known to improve the toughness of such materials whilst maintaining acceptable weathering properties by adding impact modifiers such as core-shell acrylic particles for example. Whilst these modifiers have a beneficial effect on toughness, acrylic compositions which include impact modifiers tend to have higher melt viscosities. US-A-5700566 describes composites of acrylic capstocks containing impact modifying particles and ABS substrates to use to form bathtubs. The acrylic capstock materials described in US-A-5318737 also contain impact modifier particles but are low viscosity materials which are particularly suitable for coextrusion with ABS.

According to a first aspect of the invention we provide a composite article comprising a structural layer of a thermoplastic polymer and a covering layer comprising an acrylic capstock material which comprises 40 - 100% by weight of an acrylic copolymer made by polymerising a monomer mixture comprising 50 - 99% by weight of methyl methacrylate (MMA) and 1 - 50% by weight of an alkyl acrylate wherein the alkyl acrylate is butyl acrylate; and 0 - 60% by weight of an impact modifier in the form of discrete particles each having a multi-layer structure, and optionally additives selected from lubricants, colourants, stabilisers, gloss modifiers, wherein said capstock material has a melt flow index of at least 1.5 measured as described in ASTM D-1238 using a 3.8 kg load at 230 °C, wherein the structural thermoplastic is selected from PVC or ABS.

According to a second aspect of the invention, we provide a process for making a composite article comprising a structural layer of a thermoplastic polymer and a covering layer comprising an acrylic capstock material which comprises 40 - 100% by weight of an acrylic copolymer made by polymerising a monomer mixture comprising 50 - 99% by weight of methyl methacrylate (MMA) and 1 - 50% by weight of an alkyl acrylate wherein the alkyl acrylate is butyl acrylate; and 0 - 60% by weight of an impact modifier in the form of discrete particles each having a multi-layer structure, and optionally additives selected from lubricants, colourants, stabilisers, gloss modifiers, wherein said capstock material has a melt flow index of at least 1.5, measured as described in ASTM D-1238 using a 3.8 kg load at 230 °C; by coextruding through a coextrusion die a first stream of material from a first extruder barrel comprising the structural thermoplastic polymer layer and a second stream of material comprising the acrylic capstock material from a second extruder barrel and cooling the coextruded composite article following its exit from the die.

The alkyl acrylate is butyl acrylate (BA). The amount of BA is preferably in the range 5 - 25% by weight.

The acrylic copolymer preferably has a molecular weight (Mw) of less than 180,000, more preferably < 140,000 and especially preferably < 120,000, and the Mw is most preferably in the range 80,000 - 100,000. The Mn is preferably in the range 30,000 - 50,000 and the polydispersity is normally in the range 2 - 2.4. The polymer may additionally contain residues of a chain transfer agent or initiator or other processing additive such as stabilisers etc.

The composition contains 0 - 60% by weight of an impact modifier which is in the form of discrete particles each having a multi-layer structure, known in the art as "core-shell" particles. Preferably the composition contains at least 10 %wt of impact modifier, e.g. 25 - 50%. Typical core-shell particles are formed by emulsion polymerisation and comprise a PMMA core, a rubbery first shell of a styrenic copolymer with an alkyl acrylate and an outer shell of methyl methacrylate or a copolymer thereof and numerous examples have been described in the art. A preferred core-shell particle comprises a (meth)acrylic polymer core, a first shell comprising a low Tg polymer comprising 0 - 25% by weight of a styrenic monomer and 75 - 100% of a (meth)acrylic monomer, the (meth)acrylic monomer being capable of forming a homopolymer having a Tg in the range -75 to -5 °C, the first shell representing at least 65% by volume of the combined volume of the core and first shell, and optionally a second shell which comprises a second (meth)acrylic polymer which may be the same as or different from the first (meth)acrylic polymer and the core and first shell together contain from 0.5 - 1.0 % by weight of a graft cross-linker. Suitable particles are described in WO96/37531.

The composition has a melt flow index (MFI), measured by ASTM D-1238 using a 3.8 kg load at 230 °C, of at least 1.5 g/10mins. Preferably the MFI is in the range 2.0 - 35 g/10mins, more preferably 3 - 20 g/10mins, e.g. 3 - 15 g/10mins. Foamed PVC is particularly sensitive to high temperatures and thus is normally not exposed to fabrication temperatures above about 160 - 190 °C.

The composition may optionally contain additives such as pigments, dyes, gloss-modifying compounds, UV stabilisers, thermal stabilisers, lubricants etc.

The acrylic capstock material may be applied as a relatively thin layer, i.e. at a thickness of less than about 500 µm. In many applications it is preferred to apply the capstock material at a thickness in the range 50 - 250 µm, especially 100 - 200 µm.

The structural thermoplastic may be any of those normally used in the art e.g. ABS, but in a preferred form the structural thermoplastic comprises polyvinyl chloride (PVC), including foamed PVC. The PVC may contain stabilisers, pigment, and other additives commonly found in extruded PVC polymers as known in the art. The structural thermoplastic layer may be planar to form a composite sheet material, or may be formed into a more complex shape which may be hollow, e.g. in some forms of window profile, or solid, e.g. for building profile such as that used for cladding.

The acrylic compositions are suitable for extrusion directly onto a plastic substrate, for example by coextrusion in which the acrylic composition is extruded over an extrusion of the substrate to form a covering layer of acrylic on the substrate. The acrylic may be extruded on a range of extrusion equipment, i.e. using single-screw or twin-screw extruders and dual manifold dies in addition to feedblock coextrusion systems. Although coextrusion is the preferred method for forming a layer of the acrylic material over the substrate, it is possible to form the acrylic layer separately and then secure it to the substrate. The acrylic capstock material may be applied to more than one face or surface of the structural thermoplastic, e.g. to form a three layer composite sheet or to form a profile having an acrylic covering layer over some or all of its exposed surfaces.

The invention will be further described in the following examples.

### Examples 1 - 6 Preparation of acrylic composition

The acrylic polymer was prepared by suspension polymerisation of 85 % by weight of methyl methacrylate and 15% by weight of butyl acrylate with 0.375% of lubricant and 0.34% of chain transfer agent and 0.23% of AIBN initiator. The molecular weight of the polymer was about 80 - 100,000 (measured by gel permeation chromatography against PMMA standards) and the MFI 35 - 40 g/10mins (ASTM D-1238 3.8 kg at 230 °C). Acrylic compositions (one unpigmented, the rest coloured) were prepared by melt-blending the constituents in a twin-screw extruder at a temperature in the range 230 - 250 °C. The formulations and measured MFI data is given in Table 1.

**Table 1**

| Formulation (wt%) | 1 | 2 | 3 | 4 | 5 | 6 | 7 | 8 |
|---|---|---|---|---|---|---|---|---|
| Acrylic polymer | 49.71 | 81.70 | 71.73 | 61.77 | 47.32 | 42.34 | 45.87 | 91.65 |
| impact modifier | 44.50 | 10.00 | 20.00 | 30.00 | 44.50 | 44.50 | 40.98 | - |
| gloss modifier | 5.00 | - | - | - | - | 5.00 | 5.06 | - |
| colour masterbatch | - | 7.40 | 7.40 | 7.40 | 7.40 | 7.40 | 7.37 | 7.40 |
| UV stabiliser | 0.50 | 0.50 | 0.50 | 0.50 | 0.50 | 0.50 | 0.46 | 0.50 |
| thermal stabiliser | 0.10 | 0.10 | 0.10 | 0.10 | 0.10 | 0.10 | 0.09 | 0.10 |
| lubricant | 0.19 | 0.30 | 0.27 | 0.23 | 0.18 | 0.16 | 0.17 | 0.35 |
| MFI (230 °C, 3.8 kgs) g/10mins | 3.40 | 24.30 | 15.40 | 9.80 | 4.50 | 3.70 | 3.70 | 32.40 |

### Extrusion onto PVC substrate

A coextrusion process was set up and operated having a main extruder consisting of a conical twin-screw extruder and operating at approximately 13.5 rpm in which the barrel temperature increased from 110 °C at the feed end to 185 °C at the die end. A second extruder (single-screw) was provided to extrude the capstock. A solid PVC was extruded through the main extruder. A dual manifold die produced a rigid PVC box window profile from the main extruder with an acrylic capstock layer from the second extruder.

The barrel temperature of the second extruder was set up to vary from 180 - 185 °C. The clear acrylic formulation of Formulations 1 & 8 was extruded through the second extruder into the coextrusion die using various screw speeds to produce four different thicknesses of acrylic layer (100, 150, 200 & 300 µm) on the PVC window profile. The capstock covered the profile completely, with no show-through of the substrate material.

### Extrusion of coloured acrylic material

The coextrusion arrangement was repeated but using one of the coloured acrylic formulations of Formulations 2 - 6 in the second extruder instead of the unpigmented material. Acrylic capped window profile was produced which had four different thicknesses of acrylic layer ranging from about 100 to about 300 µm. It was noted that the coloured material hid the substrate PVC very effectively, with little or no show-through of the PVC material, even when the shape of the profile provided a sharp edge or corner. This indicated that the acrylic composition conformed well to the substrate and did not thin out over sharp edges due to the rheological properties of the melt.

### Extrusion onto foamed PVC substrate

A conical twin-screw PVC foam extruder was used to extrude foam cladding at a melt temperature of 163 °C Acrylic compositions as described in Formulation 1 - 6 was extruded though a secondary extruder as described above to coextrude the acrylic layer onto a PVC foam substrate. The resulting coextrusion was passed through foam sizing equipment. The acrylic layer was extruded at several thicknesses between 100 and 500 µm.

### Impact testing

Samples of acrylic capped foam cladding made as described above and having an average capstock thickness of about 150 µm was tested for impact performance by means of a falling weight impact test as described in British Standard BS 7619. The drop height was increased until the sample failed, e.g. by splitting or cracking observed in the impacted sample. BS 7619 specifies that a material passes the test when no cracks or splits are visible in the profile following a impact from a drop height of 0.31m. All samples tested passed this requirement.

**Table 2**

| Capstock formulation | 2 | 3 | 4 | 5 | 6 |
|---|---|---|---|---|---|
| Falling weight failure height (m) | 1.3 | 1.5 | 1.5 | 1.4 | 1.4 |

### Aged impact performance

Samples of PVC foam capped with acrylic capstock of Formulation 6 were aged for 1000 hours under QUV A exposure at 50 °C as specified in BS 7619 and tested again with the falling weight. A PVC capped PVC foam sample was made by the method described above but using PVC in the secondary extruder instead of the acrylic composition as a comparative sample. The impact performance of this sample was also tested according to BS 7619. BS 7619 specifies that an aged material passes the test when no cracks or splits are visible in the profile following a impact from a drop height of 0.15m. All samples tested passed this requirement. The results are shown in Table 3.

**Table 3**

| | Aged | | Unaged | |
|---|---|---|---|---|
| | Thickness (µm) | Failure height (m) | Thickness (µm) | Failure height (m) |
| Comparative (PVC-capped foam) | 450 | 0.90 | 500 | 1.5 |
| | 300 | 0.8 | 350 | 1.1 |
| | 200 | 0.60 | 200 | 0.9 |
| Foam capped with Example 6 acrylic | 400 | 1.0 | | |
| | 200 | 0.9 | | |
| | 100 | 0.7 | | |
| Foam capped with Example 7 acrylic | | | 500 | 1.4 |
| | | | 250 | 1.1 |
| | | | 100 | 0.9 |

The mechanical properties of the acrylic capped PVC materials are comparable with the PVC capped material, but have the benefits of weatherability associated with acrylic materials. The use of acrylic compositions according to the invention enables very thin layers of acrylic material to be applied to the substrate by coextrusion, whereas this is very difficult to achieve using conventional acrylic formulations. The compositions of the invention are therefore beneficial for use on large-area or intricately shaped commercial extrusions such as window profiles, door panels, building profiles.

### Example 7 Extrusion onto ABS substrate

The capstock composition of Formulation 1 was coextruded through a single-screw extruder at temperatures of 190 - 210 °C onto a Dow 3904 high impact ABS substrate extruded through a main twin-screw extruder at about 190 - 210 °C. By varying the screw speed on the co-extruder, capstock thicknesses of about 225 µm and 130 µm were produced.

## Claims

1. A composite article comprising a. structural layer of a thermoplastic polymer and a covering layer comprising an acrylic capstock material which comprises 40 - 100% by weight of an acrylic copolymer made by polymerising a monomer mixture comprising 50 - 99% by weight of methyl methacrylate (MMA) and 1 - 50% by weight of an alkyl acrylate wherein the alkyl acrylate is butyl acrylate; and 0 - 60% by weight of an impact modifier in the form of discrete particles each having a multi-layer structure, and optionally additives selected from lubricants, colourants, stabilisers, gloss modifiers, wherein said capstock material has a melt flow index of at least 1.5 g/10mins, measured as described in ASTM D-1238 using a 3.8 kg load at 230 °C wherein the structural thermoplastic is selected from PVC and ABS.

2. A composite article as claimed in claim 1 wherein the structural thermoplastic layer is in the form of a sheet, solid or hollow shaped article.

3. A composite article as claimed in any of claims 1 or 2, wherein the acrylic capstock composition is applied to more than one face of the structural thermoptastic layer.

4. A composite article as claimed in any of claims 1 to 3, which is in the form of a door, window profile, cladding panel or other building component.

5. A process for making a composite article comprising a structural layer of a thermoplastic polymer and a covering layer comprising an acrylic capstock material which comprises 40 - 100% by weight of an acrylic copolymer made by polymerising a monomer mixture comprising 50 - 99% by weight of methyl methacrylate (MMA) and 1 - 50% by weight of an alkyl acrylate wherein the alkyl acrylate is butyl acrylate; and 0 - 60% by weight of an impact modifier in the form of discrete particles each having a multi-layer structure, and optionally additives selected from lubricants, colourants, stabilisers, gloss modifiers, wherein said capstock material has a melt flow index of at least 1.5 g/10mins, measured as described in ASTM D-1238 using a 3.8 kg load at 230 °C; by coextruding through a coextrusion die a first stream of material from a first extruder barrel comprising the structural thermoplastic polymer layer and a second stream of material comprising the acrylic capstock material from a second extruder barrel and cooling the coextruded composite article following its exit from the die.

6. A process as claimed in claim 5 wherein the capstock has a melt flow index of at least 3.0 g/10 mins.

7. A process as claimed in claim 5 or claim 6, wherein the structural thermoplastic polymer is PVC.

8. A process as claimed in claim 7 wherein the PVC is a foamed PVC.

9. A process as claimed in claim 8, including the step of passing the PVC foam through a foam sizing stage.

## Patentansprüche

1. Verbundgegenstand, enthaltend eine tragende Schicht aus einem thermoplastischen Polymer und eine Deckschicht aus einem Acryldeckbeschichtungsmaterial, da s 40-1 0 Gew.-% ei n e s durch Polymerisation einer 50-99 Gew.-% Methylmethacrylat (MMA) und 1-50 Gew.-% eines Alkylacrylats, bei dem es sich um Butylacrylat handelt, enthaltenden Monomerenmischung hergestellten Acrylcopolymers un d 0-60 Gew.-% eines Schlagzähigkeitsverbesserers in Form von diskreten Teilchen, die jeweils eine Mehrschichtstruktur aufweisen, und gegebenenfalls unter Gleitmitteln, Farbmitteln, Stabilisatoren und Glanzmodifikatoren ausgewählte Additive enthält und einen Schmelzflußindex von mindestens 1,5 g/10 min, gemessen gemäß ASTM D-1238 mit einer Belastung von 3,8 kg bei 230°C, aufweist, bei dem das thermoplastische Polymer für die tragende Schicht unter PVC und ABS ausgewählt ist.

2. Verbundgegenstand nach Anspruch 1, bei dem die tragende Schicht aus thermoplastischem Polymer in Form eines Flächengebildes oder eines massiven oder hohlen Formkörpers vorliegt.

3. Verbundgegenstand nach einem der Ansprüche 1 oder 2, bei dem das Acryldeckbeschichtungsmaterial auf mehr als eine Seite der tragenden Schicht aus thermoplastischem Polymer aufgetragen ist.

4. Verbundgegenstand nach einem der Ansprüche 1-3 in Form einer Tür, eines Fensterprofils, einer Verkleidungstafel oder eines anderen Bauteils.

5. Verfahren zur Herstellung eines Verbundgegenstands, enthaltend eine tragende Schicht aus einem thermoplastischen Polymer und eine Deckschicht aus einem Acryldeckbeschichtungsmaterial, das 40-100 Gew.-% eines durch Polymerisation einer 50-99 Gew.-% Methylmethacrylat (MMA) und 1-50 Gew.-% eines Alkylacrylats, bei dem es sich um Butylacrylat handelt, enthaltenden Monomerenmischu n g hergestellten Acrylcopolymers und 0-60 Gew.-% eines Schlagzähigkeitsverbesserers in Form von diskreten Teilchen, die jeweils eine Mehrschichtstruktur aufweisen, und gegebenenfalls unter Gleitmitteln, Farbmitteln, Stabilisatoren u n d Glanzmodifikatoren ausgewählte Additive enthält und einen Schmelzflußindex von mindestens 1,5 g/10 min, gemessen gemäß ASTM D-1238 mit einer Belastung von 3,8 kg bei 230°C, aufweist, durch Coextrudieren eines ersten Materialstroms, der die tragende Schicht aus thermoplastischem Polymer darstellt, aus einem ersten Extruderzylinder und eines zweiten Materialstroms, der das Acryldeckbeschichtungsmaterial darstellt, aus einem zweiten Extruderzylinder durch eine Coextrusionsdüse und Abkühlen de s coextrudierten Verbundgegenstands nach dem Austritt aus der Düse.

6. Verfahren nach Anspruch 5, bei dem die Deckbeschichtung einen Schmelzflußindex von mindestens 3,0 g/10 min aufweist.

7. Verfahren nach Anspruch 5 oder 6, bei der es sich bei dem thermoplastischen Polymer für die tragende Schicht um PVC handelt.

8. Verfahren nach Anspruch 7, bei dem es sich bei dem PVC um verschäumtes PVC handelt.

9. Verfahren nach Anspruch 8, bei dem man den PVC-Schaumstoff durch eine Schaumstoffkalibrierstufe führt.

## Revendications

1. Article de matière composite comprenant une couche structurelle d'un polymère thermoplastique et une couche de recouvrement comprenant une matière acrylique de protection qui comprend de 40 à 100 % en poids d'un copolymère acrylique préparé en polymérisant un mélange de monomères comprenant de 50 à 99 % en poids de méthacrylate de méthyle (MMA) et de 1 à 50 % en poids d'un acrylate d'alkyle, l'acrylate d'alkyle étant l'acrylate de butyle ; et de 0 à 60 % en poids d'un modificateur d'impact sous la forme de particules discrètes chacune ayant un e structure multicouche, et éventuellement des additifs choisis parmi des lubrifiants, de s colorants, d e s agent stabilisants, de s modificateurs de brillance, ladite matière de protection ayant un indice de fluage d'au moins 1, 5 g/ 10 min, mesuré comme décrit d'après la norme ASTM D-1238 en utilisant une charge de 3,8 kg à 230°C, le thermoplastique structurel étant choisi parmi des polymères de PVC et d'ABS.

2. Article de matière composite selon la revendication 1, da n s lequel la couche thermoplastique structurelle est sous la forme d'une feuille, d'un article de forme pleine ou creuse.

3. Article de matière composite selon l'une quelconque des revendications 1 ou 2, dans lequel la composition acrylique de protection est appliquée sur plus d'une face de la couche thermoplastique structurelle.

4. Article de matière composite selon l'une quelconque des revendications 1 à 3, lequel est sous forme de porte, de profil de fenêtre, de panneau de revêtement ou de tout autre composant de bâtiment.

5. Procédé pour fabriquer un article de matière composite comprenant une couche structurelle d'un polymère thermoplastique et un e couche de recouvrement comprenant une matière acrylique de protection qui comprend de 40 à 100 % en poids d'un copolymère acrylique préparé en polymérisant un mélange de monomères comprenant de 50 à 99 % en poids de méthacrylate de méthyle (MMA) et de 1 à 50 % en poids d'un acrylate d'alkyle, l'acrylate d'alkyle étant l'acrylate de butyle ; et de 0 à 60 % en poids d'un modificateur d'impact sous la forme de particules discrètes chacune ayant une structure multicouche, et éventuellement des additifs choisis parmi des lubrifiants, des colorants, de s agents stabilisants, des modificateurs de brillance, ladite matière de protection ayant un indice de fluage d'au moins 1,5 g/10 min, mesuré comme décrit d'après la norme ASTM D-1238 en utilisant une charge de 3,8 kg à 230°C ; en co-extrudant à l'aide d'une matrice de co-extrusion un premier jet de matière d'un premier cylindre d'extrudeuse comprenant la couche de polymère thermoplastique structurel et un deuxième jet de matière comprenant la matière acrylique de protection d'un deuxième cylindre d'extrudeuse et en refroidissant l'article de matière composite co-extrudé à la suite de sa sortie de la matrice.

6. Procédé selon la revendication 5, dans lequel le de protection a un indice de fluage d'au moins 3,0 g/10 min.

7. Procédé selon la revendication 5 ou la revendication 6, da n s lequel 1 e polymère thermoplastique structurel est le PVC.

8. Procédé selon la revendication 7, dans lequel le PVC est une mousse de PVC.

9. Procédé selon la revendication 8, comprenant l'étape consistant à faire passer la mousse de PVC par une étape de calibrage de la mousse.
